Europäisches Patentamt

European Patent Office

Office européen des brevets

(11) Publication number: **0 270 099**
**A2**

(12) **EUROPEAN PATENT APPLICATION**

(21) Application number: **87117839.8**

(22) Date of filing: **02.12.87**

(51) Int. Cl.⁴: **C04B 35/00 , C04B 35/46 ,**
**H01B 3/12 , H01G 4/12**

(30) Priority: **04.12.86 JP 287726/86**

(43) Date of publication of application:
**08.06.88 Bulletin 88/23**

(84) Designated Contracting States:
**DE FR GB**

(71) Applicant: **Taiyo Yuden Kabushiki Kaisha**
**2-12, Ueno 1-chome**
**Taito-ku Tokyo 110(JP)**

(72) Inventor: **Kishi, Hiroshi**
**No. 1203, Higashihirai**
**Fujioka-shi Gunma-ken(JP)**
Inventor: **Murai, Shunji**
**Taiyo-so, No. 2-1-38, Nakaimachi**
**Takasaki-shi Gunma-ken(JP)**
Inventor: **Chazono, Hirokazu**
**No. 780, Kenzakimachi**
**Takasaki-shi Gunma-ken(JP)**
Inventor: **Fukui, Masami**
**No. 1062-2, Kamisatomi**
**Harunamachi Gunma-ken(JP)**
Inventor: **Yamaoka, Nobutatsu**
**No. 226-7, Nakasatomi**
**Harunamachi Gunma-ken(JP)**

(74) Representative: **Schmidt-Evers, Jürgen,**
**Dipl.-Ing. et al**
**Patentanwälte Dipl.-Ing. H. Mitscherlich**
**Dipl.-Ing. K. Gunschmann Dipl.-Ing.**
**Dr.rer.nat. W. Körber Dipl.-ing. J.**
**Schmidt-Evers Dipl.-Ing. W. Melzer**
**Steinsdorfstrasse 10**
**D-8000 München 22(DE)**

(54) **Dielectric ceramic.**

(57) There is disclosed a dielectric ceramic comprising a polycrystalline substance. Each of grains (2) constituting said polycrystalline substance comprises a dielectric main phase (3) and a composite phase (4) being composed of a component of said main phase (3) and a component other than that of said main phase (3), having dielectric characteristics different from those of said main phase (3) and surrounding said main phase (3).

FIG.1

December 2, 1987

## DIELECTRIC CERAMIC

Detailed Description of the Invention:

(Field of Industrial Applications)

This invention relates to a dielectric ceramic for use as a ceramic capacitor or the like.

(Prior Art)

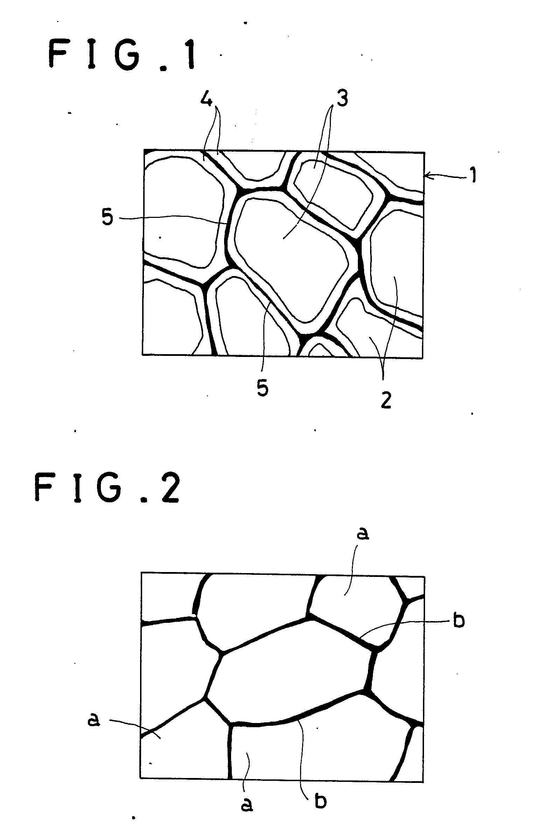

$BaTiO_3$ ceramics, $(Ba_{1-x}Sr_x)TiO_3$ ceramics, $TiO_2$ ceramics, etc. are hitherto known as dielectric ceramics. As shown in FIG.2, these ceramics each comprise grains a constituting a polycrystal and a grain boundary phase b present between these grains a. The specific inductive capacity εs and temperature characteristics are determined by the components of the grains a. Therefore, in order to improve the specific inductive cpacity εs or temperature characteristics of the dielectric ceramics, it is a usual practice to add various components to the grains a.

(Problems to be Solved by the Invention)

However, the addition of various components to the grains a causes either the temperature characteristics to become deteriorated even if the specific inductive capacity εs can be increased thereby, or conversely the specific inductive capacity to become decreased even if the temperature characteristics are improved thereby, so that there remains unremoved such an inconvenience that a dielectric ceramic improved in both the specific inductive capacity εs and

0 270 099

2

temperature characteristics cannot be obtained..

An object of the present invention is to provide a dielectric ceramic improved in both the specific inductive capacity εs and temperature characteristics through the elimination of the above-mentioned inconvenience.

(Means to Solve the Problems)

The dielectric ceramic of the present invention comprises a polycrystalline substance in which each of grains constituting said polycrystalline substance comprises a dielectric main phase and a composite phase being composed of a component of said main phase and a component other than that of said main phase, having dielectric characteristics different from those of said main phase, and surrounding said main phase.

(EXAMPLES)

The present invention will now be described by way of examples with reference to the accompanying drawings.

Brief Description of the Drawings:

FIG. 1 is a schematic view of a crystalline structure of an example of the dielectric ceramic according to the present invention, and FIG. 2 is a schematic view of a crystalline structure of a conventional dielectric ceramic.

It contains:

1 ... polycrystalline substance    2 ... grain, 3 ... main phase,    4 ... composite phase, 5 ... grain boundary phase

In the drawing, numeral 1 designates a polycrystalline substance constituting a dielectric ceramic. Each grain 2 thereof comprises a dielectric main phase 3 and a composite phase 4 surrounding the main phase. The composite phase 4 comprises a solid solution composed of a component of the main phase and a component other than that of the main phase and has dielectric characteristic) different from those of the main phase 3. In the drawing, numeral 5 designates a grain boundary phase present between the grains 2.

The main phase 3 comprises, e.g., a perovskite type oxide, $ABO_3$, such as $(Ba, Sr, Ca)(Ti, Zr)O_3$, $BaSnO_3$, $Pb(Co_{1/2}Nb_{1/2})O_3$, $Pb(Mn_{1/2}W_{1/2})O_3$ or $Ba(Mg_{1/3}Nb_{2/3})O_3$, a tungsten bronze type oxide, $AB_2O_6$, such as $CaNb_2O_6$ or $SrTa_2O_6$, a pyrochlore type oxide, $A_2B_2O_7$, such as $Nd_2Ti_2O_7$ or $MgNb_2O_7$, a lamellar oxide such as $Sr_2Bi_4Ti_5O_{18}$ or $PbBi_2O_9$, and an oxide of a single element, such as $TiO_2$, $SnO_2$ or $ZnO$. In the above-mentioned $ABO_3$ $AB_2O_6$, and $A_2B_2O_7$, A and B are each an element selected from among Mg, Ca, Sr, Ba, Ni, Cu, Zn, Pb, Bi, Ti, Zr, Nb, Ta, Cr, Mn, Fe, Co, Y, La, Ce, Pr, Nd, Sm, Dy, Aℓ, Si, W, Sn and Sb.

With respect to the composite phase 4, its component other than that of the main phase 3, which together with the component of the main phase 3 consitutes a solid solution, is selected from among Li, Na, K, Mg, Ca, Sr, Ba, Ni, Cu, Zn, Pb, Bi, Ti, etc.

The grain boundary phase 5 is present in the form of a glassy matrix composed of an element selected from among Li, Na, K, Si, Mn, Cu, Aℓ, B, Mg, Ca, Sr,

5

Ba, Ni, Zn, etc.

More specific examples of the present invention will now be described together with comparative examples.

EXAMPLE 1

50.0 g of titanium oxide ($TiO_2$) having an average particle diameter of 2 μm, 1.79 g of magnesium chloride ($MgC\ell_2$), and 4.25 g of barium chloride ($BaC\ell_2 \cdot 2H_2O$) were weighed out so that the proportions of $MgC\ell_2$ and $BaC\ell_2 \cdot 2H_2O$ were each 3 mol% based on 1 mol of $TiO_2$, and subjected to wet mixing in a ball mill using water as a solvent for 10 hr. The resulting mixture was spray-dried with a spray drier to obtain a powder having an average particle diameter of 10 μm. 5% by weight, based on the powder, of a PVA binder was added to the powder, followed by mixing in an attritor for about 30 min to prepare modules. The obtained modules were put into a mold and compressed under a pressure of 2 ton/$cm^2$ to form a disk having a diameter of 20 mmø and a thickness of 1 mm. The disk was then fired at 1300°C for 2 hr. Thus, there were obtained 50 sinters.

Part of the obtained sinters were sliced and treated with an ion mill, followed by the examination of an elementary composition of the sinter with a scanning transmission electron microscope (STEM). As a result, it was found that the sinter comprised grains each composed of a main phase of $TiO_2$ and a composite phase of a perovskite type structure being composed of $(Mg, Ba)TiO_3$ and surrounding the main phase, and grain boundary phases present between these grains.

Thereafter, both surfaces of the remaining sinters were coated with a silver paste. Each sinter was then dried at 150°C for 5 min and fired at 850°C for 10 min. Thus, there were obtained 40 ceramic capacitors. Among them, 20 were subjected to the measurement of the specific inductive capacity, $\varepsilon s$, and dielectric loss, $\tan\sigma$, with a 4192ALCR meter manufactured by Hewlett-Packard at room temperature with a frequency of 1 kHz. The data thus obtained were averaged and the results are shown in the following table. Further, 100 V D.C. was applied to each sample, and the insulation resistance, IR, was measured after 1 min with an ultra-insulation testing set SM9E manufactured by Toa Electronics Ltd. The data thus obtained were averaged and shown in the following table. The remaining 20 ceramic capacitors were each put in a thermostatic chamber, and observed on changes in the capacitance at a temperature ranging from -25°C to +85°C. The maximum values on the plus side and minus side of the rate of change (%) according to JIS C 5102 are shown in the following table.

COMPARATIVE EXAMPLE 1

50.0 g of titanium oxide ($TiO_2$) having an average particle diameter of 2 μm, 0.76 g of magnesium oxide (MgO), and 3.71 g of barium carbonate ($BaCO_3$) were weighed out so that the proportions of MgO and $BaCO_3$ were each 3 mol% based on 1 mol of $TiO_2$. Thereafter, the same procedures as those of EXAMPLE 1 were repeated to prepare ceramic capacitors. Various characteristics of the ceramic capacitors thus obtained were measured and the results are shown in the following table.

EXAMPLE 2

Equimolar amounts of barium carbonate ($BaCO_3$) and titanium oxide ($TiO_2$) were weighed out and subjected to wet mixing in a ball mill for 15 hr. The resulting mixture was dried and calcined at 1200°C for 3 hr to obtain a barium titanate ($BaTiO_3$) powder having an average particle diameter of 2.5 μm.

Thereafter, 50 g of $BaTiO_3$, 0.91 g of strontium nitrate [$Sr(NO_3)_2$], 1.06 g of calcium nitrate [$Ca(NO_3)_2$], and 2.01 g of titanium oxynitrate

$[TiO(NO_3)_2]$ were weighed so that the proportions of $Sr(NO_3)_2$, $Ca(NO_3)_2$, and $TiO(NO_3)_2$ were respectively 2 mol%, 3 mol% and 5 mol% based on 1 mol of $BaTiO_3$. They were subjected to wet mixing in a ball mill using water as a solvent for 15 hr. The resulting mixture was spray-dried with a spray drier to obtain a powder having an average particle diameter of 10 μm. The powder was molded into a disk in the same manner as that of EXAMPLE 1. The disk was then fired at 1380°C for 2 hr. Thus, there were obtained 50 sinters.

Elementary compositions of the sinters thus obtained were examined in the same manner as that of EXAMPLE 1 with a scanning transmission electron microscope. As a result, it was found that the sinter comprised grains each composed of a main phase of $BiTiO_3$ and a composite phase of a perovskite type structure being composed of $(Ba, Sr, Ca)TiO_3$ and surrounding the main phase, and grain boundary phases present between these grains.

Ceramic capacitors were prepared from the remaining sinters in the same manner as that of EXAMPLE 1. Various characteristics of the capacitors were measured and the results are shown in the following table.

COMPARATIVE EXAMPLE 2

50 g of barium titanate ($BaTiO_3$) having an average particle diameter of 2.5 µm, 0.63 g of strontium carbonate ($SrCO_3$), 0.64 g of calcium carbonate ($CaCO_3$), and 0.86 g of titanium oxide ($TiO_2$) were weighed out so that the proportions of $SrCO_3$, $CaCO_3$, and $TiO_2$ were respectively 2 mol%, 3 mol% and 5 mol% based on 1 mol of $BaTiO_3$. Thereafter, ceramic capacitors were prepared in the same manner as that of EXAMPLE 2, followed by measurements of various characteristics of the capacitors. The results are shown in the following table.

EXAMPLE 3

649.3 g of strontium carbonate ($SrCO_3$) and 350.7 g of titanium oxide ($TiO_2$), i.e., equimolar amounts of $SrCO_3$ and $TiO_2$, were weighed out and subjected to wet mixing in a ball mill for 15 hr. The resulting mixture was dried and calcined at 1200°C for 2 hr to obtain a strontium titanate ($SrTiO_3$) powder having an average particle diameter of 2.0 µm. Thereafter, 50 g of $SrTiO_3$, 2,92 g of magnesium acetate [$Mg(C_2H_3O_2)_2 \cdot 4H_2O$], and 3.87 g of isopropyl titanate [$Ti(OC_3H_7)_4$] were weighed out so that the proportions of $Mg(C_2H_3O_2)_2 \cdot 4H_2O$ and $Ti(OC_3H_7)_4$ were each 5 mol% based on 1 mol of $SrTiO_3$, and mixed

with each other in a ball mill using ethanol as a solvent for 10 hr. The resulting mixture was boiled to dryness in a stainless steel vessel to obtain a powder. The powder was molded into a disk in the same manner as that of EXAMPLE 1. The disk thus obtained was fired at 1300°C for 3 hr. Thus, there was obtained 50 sinters.

Elementary compositions of the sinters thus obtained were examined in the same manner as that of EXAMPLE 1 with a scanning transmission electron microscope. As a result, it was found that the sinter comprised grains each composed of a main phase of $SrTiO_3$ and a composite phase being composed of $(Sr_{1-x}Mg_x)TiO_3$ and surrounding the main phase, and grain boundary phases present between these grains.

In the same manner as that of EXAMPLE 1, ceramic capacitors were prepared from the remaining sinters and various characteristics of the capacitors were measured. The results are shown in the following table.

COMPARATIVE EXAMPLE 3

50 g of strontium titanate ($SrTiO_3$) having an average particle diameter of 2.0 μm, 0.55 g of magnesium oxide (MgO), and 1.09 g of titanium oxide ($TiO_2$) were weighed out so that the proportions of MgO

and $TiO_2$ were each 5 mol% based on 1 mol of $SrTiO_3$. Thereafter, ceramic capacitors were prepared in the same manner as that of EXAMPLE 3 and measured of various characteristics thereof. The results are shown in the following table.

EXAMPLE 4

Neodymium oxide ($Nd_2O_3$) and titanium oxide ($TiO_2$) were weighed out so as to provide a molar ratio of 1 : 2, and subjected to wet mixing in a ball mill for 15 hr. The resulting mixture was dried and calcined at 1250°C for 2 hr to obtain a neodymium titanate ($Nd_2Ti_2O_7$) powder having an average particle diameter of 2 μm.

Thereafter, 100 g of $Nd_2Ti_2O_7$, 1.89 g of titanium oxynitrate [$TiO(NO_3)_2$], 1.91 g of lead acetate [$Pb(C_2H_3O_2)_2 \cdot 3H_2O$], and 1.29 g of barium acetate [$Ba(C_2H_3O_2)_2$] were weighed out so that the proportions of $TiO(NO_3)_2$, $Pb(C_2H_3O_2)_2 \cdot 3H_2O$, and $Ba(C_2H_3O_2)_2$ were respectively 10 mol%, 5 mol%, and 5 mol% based on 1 mol of $Nd_2Ti_2O_7$, and mixed with each other in a ball mil using water as a solvent for 15 hr. The resulting mixture was spray-dried with a spray drier to obtain a powder having an average particle diameter of 20 μm. The powder thus obtained was molded into a disk in

12

the same manner as that of EXAMPLE 1. The disk was calcined at 1230°C for 2 hr. Thus, there were obtained 50 sinters.

Thereafter, elementary compositions of the sinters thus obtained were examined in the same manner as that of EXAMPLE 1 with a scanning transmission electron microscope. As a result, it was found that the sinter comprised grains each composed of a main phase of $Nd_2Ti_2O_7$ and a composite phase composed of BaO, PbO, $Nd_2O_3$, and $TiO_2$ and surrounding the main phase, and grain boundary phases present between these grains.

In the same manner as that of EXAMPLE 1, ceramic capacitors were prepared from the remaining sinters and various characteristics of the capacitors were measured. The results are shown in the following table.

COMPARATIVE EXAMPLE 4

50 g of neodymium titanate ($Nd_2Ti_2O_7$) having an average particle diameter of 2 μm, 1.12 g of lead oxide (PbO), 0.99 g of barium carbonate ($BaCO_3$), and 0.80 g of titanium oxide ($TiO_2$) were weighed out so that the proportions of PbO, $BaCO_3$, and $TiO_2$ were 5 mol%, 5 mol%, and 10 mol% based on 1 mol of $Nd_2Ti_2O_7$. Thereafter, in the same manner as that of EXAMPLE 4, ceramic capacitors were prepared and various characteristics of the capacitors were measured. The results are shown in the following table.

Table

| | Component | $\varepsilon_s$ 25°C 1 kHz | tanσ 25°C 1 kHz | IR (MΩ) | Rate of change in C with temp. (%) |
|---|---|---|---|---|---|
| Ex. 1 | main phase: $TiO_2$<br>composite phase: $(Mg, Ba)TiO_3$ | 107 | 0.04 | $5 \times 10^5$ | +0.8<br>−1.8 |
| Comp. Ex. 1 | $TiO_2$−0.03MgO−0.03BaO | 85 | 0.05 | $5 \times 10^5$ | +3.1<br>−4.8 |
| Ex. 2 | main phase: $BaTiO_3$<br>composite phase: $(Ba, Sr, Ca)TiO_3$ | 5000 | 1.4 | $2 \times 10^5$ | +10.2<br>−22.3 |
| Comp. Ex. 2 | $BaTiO_3$−0.02SrO−0.03 CaO−0.05$TiO_2$ | 1800 | 1.2 | $2 \times 10^5$ | +91.3<br>−27.4 |
| Ex. 3 | main phase: $SrTiO_3$<br>composite phase: $(Sr, Mg)TiO_3$ | 230 | 0.06 | $4 \times 10^5$ | +4.5<br>−5.6 |
| Comp. Ex. 3 | $SrTiO_3$−0.05MgO−0.05 $TiO_2$ | 160 | 0.08 | $3 \times 10^5$ | +8.6<br>−9.4 |
| Ex. 4 | main phase: $Nd_2Ti_2O_7$<br>composite phase: $BaO$−$PbO$−$Nd_2O_3$−$TiO_2$ | 52 | 0.03 | $4 \times 10^5$ | +0.8<br>−0.4 |
| Comp. Ex. 4 | $Nd_2Ti_2O_7$−0.05BaO−0.05 PbO−0.10$TiO_2$ | 43 | 0.05 | $3 \times 10^5$ | +1.5<br>−1.2 |

15

As is apparent from the table, all the ceramic capacitors prepared in EXAMPLES 1 to 4 exhibited an electric loss, tan$\sigma$, and an insulation resistance, IR, each substantially comparable to those of the ceramic capacitors prepared in COMPARATIVE EXAMPLES 1 to 4 and were higher in the specific inductive capacity, $\epsilon$s, and smaller in the rate (%) of changes in capacitance, C, with the temperature than the ceramic capacitors prepared in COMPARATIVE EXAMPLES 1 to 4.

(Effect of the Invention)

As is apparent from the foregoing description, the dielectric ceramic of the present invention exhibits excellent specific inductive capacity, $\epsilon$s, and temperature characteristics by virtue of its structure such that each grain constituting a polycrystal comprises a dielectric main phase and a composite phase being composed of a component of said main phase and a component other than that of said main phase, having dielectric characteristics different from those of said main phase and surrounding said main phase.

CLAIMS

1. A dielectric ceramic comprising a polycrystalline substance, characterized in that each of grains (2) constituting said polycrystalline substance comprises a dielectric main phase (3) and a composite phase (4) being composed of a component of said main phase (3) and a component other than that of said main phase (3), having dielectric characteristics different from those of said main phase (3) and surrounding said main phase (3).

2. A dielectric ceramic according to claim 1, characterized in that said main phase (3) comprises $ABO_3$, $AB_2O_6$ or $A_2B_2O_7$, wherein A and B are each an element selected from among Mg, Ca, Sr, Ba, Ni, Cu, Zn, Pb, Bi, Ti, Zr, Nb, Ta, Cr, Mn, Fe, Co, Y, La, Ce, Pr, Nd, Sm, Dy, Aℓ, Si, W, Sn and Sb.

3. A dielectric ceramic according to claim 1, characterized in that said main phase (3) comprises an oxide of a single element.

4. A dielectric ceramic according to any one of claims 1 to 3, characterized in that said component other than that of said main phase (3) comprises one or more elements selected from among Li, Na, K, Mg, Ca, Sr, Ba, Ni, Cu, Zn, Pb, Bi and Ti.

# F I G . 1

# F I G . 2